# EUROPÄISCHE PATENTSCHRIFT

(11) **EP 2 079 902 B1**
(45) Veröffentlichungstag und Bekanntmachung des Hinweises auf die Patenterteilung: **15.12.2010**
(21) Anmeldenummer: 07817650.0
(22) Anmeldetag: 11.10.2007
(51) Int. Cl.: F01D 11/02, F16J 15/32

(54) **DICHTUNGSANORDNUNG**
SEAL ARRANGEMENT
SYSTÈME DE JOINT D'ÉTANCHÉITÉ

(30) Priorität: 20.10.2006 DE 102006049634
(43) Veröffentlichungstag der Anmeldung: 22.07.2009
(73) Patentinhaber: MTU Aero Engines GmbH, 80995 München (DE)
(72) Erfinder: GAIL, Alfons, 86316 Friedberg (DE); GRÄBELDINGER, Wilhelm, 80637 München (DE); RAUSCHMEIER, Alexander, 80802 München (DE)
(86) Internationale Anmeldenummer: PCT/DE2007/001808
(87) Internationale Veröffentlichungsnummer: WO 2008/046390

(56) Entgegenhaltungen:
- EP-A- 1 006 301
- DE-A1- 19 618 475
- DE-T2- 60 305 357

## Beschreibung

Die Erfindung betrifft eine Dichtungsanordnung nach dem Oberbegriff des Anspruchs 1.

Aus der DE 196 18 475 A1 ist eine Dichtungsanordnung für eine nicht-hermetische Dichtung eines Spalts zwischen einem Stator und einem Rotor bekannt. Die dort gezeigte Dichtungsanordnung verfügt über eine Bürstendichtung, wobei die Bürstendichtung über ein mehrere Borsten aufweisendes Borstenpaket verfügt, wobei die Borsten um ein Kernelement gewickelt und am Kernelement fixiert sind, und wobei die Borsten gegenüber Borstenschäften abgewinkelte Dichtborstenabschnitte aufweisen, deren freie Enden gegen eine Dichtfläche des Rotors laufen. Solche Bürstendichtungen mit abgewinkelten Dichtborstenabscbnitten werden auch als Hakenbürstendichtungen bezeichnet. Das Borstenpaket der Bürstendichtung ist in einem Aufnahmeraum angeordnet, der von einem Stützelement und von einem Deckelement begrenzt ist. Nach der DE 196 18 475 A1 verfügt sowohl das Stützelement als auch das Deckelement über Vorsprünge, die der Abstützung der gegenüber den Borstenschäften abgewinkelten Dichtborstenabschnitte der Borsten gegenüber einer einwirkenden Druckdifferenz dienen.

Aus der EP-A-1 006 301 ist eine vergleichbare Hakenbürstendichtung bekannt, bei der die Dichtborstenabschnitte der Borsten einseitig von einem abgewinkelten Stützabschnitt des Stützelements gegen einwirkende Druckdifferenzen abgestützt werden. Im unbelasteten Zustand - ohne Druckdifferenz - ist zwischen den Dichtborstenabschnitten und dem Stützabschnitt ein Spalt vorhanden der sich erst bei Einwirkung einer relevanten Druckdifferenz schließt. Auch hier ist keine Vorkehrung gegen den blow-down-Effekt getroffen.

Bei dieser aus dem Stand der Technik bekannten Dichtungsanordnung kann an den der Strömung zugewandten Borsten des Borstenpakets ein sogenannter blow-down-Effekt auftreten, wodurch die Dichtborstenabschnitte der Borsten radial in Richtung auf den Rotor bewegt werden. Durch diesen blow-down-Effekt werden demnach die Dichtborstenabschnitte der Borsten auf den Rotor gedrückt und dadurch stark abgeschliffen, wodurch sich ein vorzeitiger Verschleiß derselben einstellt.

Das Dokument DE 603 05 357 T2 betrifft eine "offene" Bürstendichtung ohne einen definierten Aufnahmeraum für das Borstenpaket. Die Borsten zeigen einem geknickten bzw. gebogenen Verlauf, wobei der Knick bzw. die Biegung an einem Anschlagglied anliegt, welches eine Abstützung gegenüber dem blow-down-Effekt (hier "aerodynamisches Ausblasen" genannt) bewirkt. Das Anschlagglied ist so ausgeführt (z.B. Bimetall), dass es temperaturabhängig seinen Anschlagdurchmesser ändert, damit die Borsten stets möglichst druck- und reibungsarm an dem zugehörigen Bauteil anliegen. Somit wird die Borstenposition so geregelt, dass die Borstenspitzen das Bauteil nur leicht berühren.

Hiervon ausgehend liegt der vorliegenden Erfindung das Problem zu Grunde, eine neuartige Dichtungsanordnung in Form einer Hakenbürstendichtung zu schaffen.

Dieses Problem wird durch eine Dichtungsanordnung gemäß Anspruch 1 gelöst. Erfindungsgemäß weist das Deckelement an einem den Dichtborstenabschnitten benachbarten Ende eine Auflagefläche für die Borstenschäfte auf, wobei der Durchmesser der Auflagefläche in Relation zum inneren Durchmesser des Borstenpakets so gewählt ist, dass bei einer statischen Exzentrizität des Rotors die Dichtborstenabschnitte die Dichtfläche des Rotors noch am gesamten Umfang berühren.

Bei der erfindungsgemäßen Dichtungsanordnung ist die radiale Beweglichkeit der Dichtborstenabschnitte der Borsten der Bürstendichtung in Richtung auf den Rotor begrenzt, wodurch ein frühzeitiger Verschleiß der Borsten durch einen blow-down-Effekt weitestgehend eliminiert und dadurch die Lebensdauer der Dichtungsanordnung erhöht werden kann. Auch bei statischer Rotorexzentrizität ist noch eine ausreichende Dichtwirkung gegeben.

Vorzugsweise weist das die Auflagefläche bildende Deckelement eine mindestens zweifach höhere Steifigkeit als das Borstenpaket auf.

Nach einer vorteilhaften Weiterbildung der Erfindung ist ein sich zwischen der Auflagefläche des Deckelements und einem Klemmelement der Bürstendichtung erstreckender Abschnitt des Deckelements unter Ausbildung eines Biegefreiraums bezogen auf die Auflagefläche von dem Borstenpaket abgestellt, wobei das Stützelement gegenüberliegend zur Auflagefläche des Deckelements eine Aufwölbung aufweist, die unter Ausbildung einer Kavität vom Borstenpaket abgestellt ist, und wobei sich die stützelementseitige Kavität und der deckelementseitige Biegefreiraum abschnittsweise überlappen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

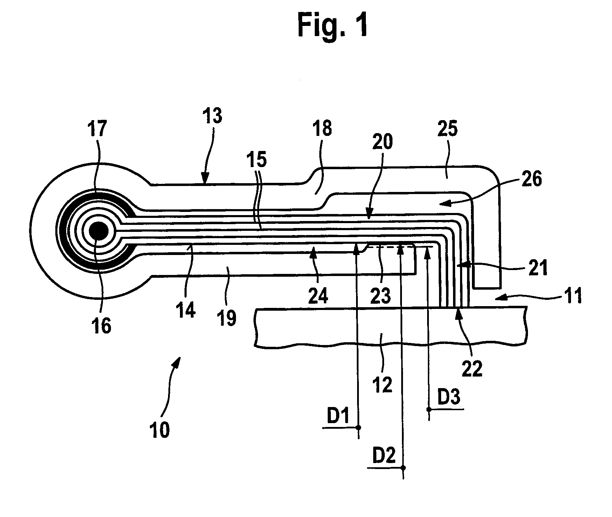

- Fig. 1: eine schematisierte Darstellung einer erfindungsgemäßen Dichtungsanordnung.

Fig. 1 zeigt eine schematisierte Darstellung einer erfindungsgemäßen Dichtungsanordnung 10 zur nicht-hermetischen Abdichtung eines Spalts 11 zwischen einem Rotor 12 und einem nicht-dargestellten Stator. Dem Stator ist eine Bürstendichtung 13 zugeordnet, wobei die Bürstendichtung 13 ein Borstenpaket 14 aus mehreren Borsten 15 umfasst, die um ein Kernelement 16 gewickelt und am Kernelement 16 über ein Klemmelement 17 fixiert sind.

Das Borstenpaket 14 ist in einem Aufnahmeraum angeordnet, welcher von einem Stützelement 18 und einem Deckelement 19 begrenzt ist. Die Borsten 15 des Borstenpakets 14 verfügen über Borstenschäfte 20 sowie gegenüber den Borstenschäften 20 abgewinkelte Dichtborstenabschnitte 21, wobei freie Enden der Dichtborstenabschnitte 21 gegen eine Dichtfläche 22 des Rotors 12 laufen.

Im Sinne der hier vorliegenden Erfindung weist das Deckelement 19 an einem den Dichtborstenabschnitten 21 benachbarten Ende eine Auflagefläche 23 auf, wobei die Auflagefläche 23 die Borstenschäfte 20 in einem definierten, örtlich begrenzten Bereich berührt, und zwar derart, dass die radiale Beweglichkeit der Dichtborstenabschnitte 21 in Richtung auf den Rotor 12 begrenzt ist. Dabei ist die radiale Beweglichkeit der Dichtborstenabschnitte 21 in Richtung auf den Rotor 12 derart begrenzt, dass ein Schließen der Bürstendichtung nur bis zum Berühren der Dichtfläche 22 des Rotors 12 erfolgen kann.

Gemäß Fig. 1 ist ein sich zwischen der Auflagefläche 23 des Deckelements 19 und dem Klemmelement 17 des Borstenpakets 14 erstreckender Abschnitt des Deckelements 19 unter Ausbildung eines Biegefreiraums 24 für die Borstenschäfte 20 von dem Borstenpaket 14 abgestellt. Das Stützelement 18 weist gegenüberliegend zur Auflagefläche 23 des Deckelements 19 eine Aufwölbung 25 auf, die ebenfalls von den Borsten 15 des Borstenpakets 14 abgestellt ist und eine Kavität 26 ausbildet. Die stützelementseitige Kavität 26 und der deckelementseitige Biegefreiraum 24 überlappen sich gemäß Fig. 1 abschnittsweise.

Durch die erfindungsgemäße Ausführung der Dichtungsanordnung ist die radiale Beweglichkeit der Dichtborstenabschnitte 21 des Borstenpakets 14 in Richtung auf die Dichtfläche 22 des Rotors 12 begrenzt. Die Dichtborstenabschnitte 21 werden möglichst im optimalen line-to-line-Kontakt zur Dichtfläche 22 des Rotors 12 betrieben, wodurch ein frühzeitiger Verschleiß derselben vermieden werden kann. Hierdurch wird die Lebensdauer der Dichtungsanordnung gegenüber aus dem Stand der Technik bekannten Dichtungsanordnungen deutlich erhöht.

Gemäß Fig. 1 erfolgt die Abstützung der Borstenschäfte 20 an der Anlagefläche 23 lediglich örtlich, wodurch ein Druckausgleich zum Biegefreiraum 24 erleichtert wird.

Vorzugsweise weist das die Auflagefläche 23 bildende Deckelement 19 eine mindestens zweifach höhere Steifigkeit als das Borstenpaket 14 der Bürstendichtung 13 auf. Hierdurch wird ein Verbiegen des Deckelements 19 in Folge des blow-down-Effekts vermieden.

Neben den Bezugszeichen 10 bis 26 beinhaltet Figur 1 noch drei Durchmesserangaben D1 bis D3. D1 steht für den inneren Durchmesser des Borstenpakets 14 im Bereich der Auflagefläche 23 für den Fall, dass die Dichtborstenabschnitte 21 zwanglos und dichtend die Dichtfläche 22 des Rotors 12 berühren. Der Durchmesser D2 der Auflagefläche 23 wird bevorzugt gleich groß wie der innere Durchmesser D1 des Borstenpakets 14 gewählt, damit im Betrieb kein relevanter blow-down-Effekt auftritt, und die Dichtborstenabschnitte 21 weitgehend verschleißfrei dichtend die Dichtfläche 22 berühren. Dies gilt im Grunde aber nur dann, wenn die rotierende Dichtfläche 22 zur Bürstendichtung 13 konzentrisch positioniert ist.

Tatsächlich treten aber des öfteren statische, d.h. nicht-umlaufende Exzentrizitäten des Rotors 12 relativ zur statorfesten Bürstendichtung 13 auf. Solche Exzentrizitäten können fertigungs- bzw. montagebedingt und auch belastungsbedingt sein, z.B. infolge der Schwerkraft bei schweren Rotoren. Dann kann es vorteilhaft sein, in Relation zum konzentrischen Betrieb den Durchmesser der Auflagefläche 23 auf einen kleineren Wert D3 (gestrichelte Linie in Figur 1) zu reduzieren. Dadurch kann sichergestellt werden, dass bei exzentrischer Rotorlage die Dichtborstenabschnitte 21 noch den gesamten Umfang der Dichtfläche 22 dichtend berühren. Dabei wird zwar über einen Teil des Bürstendichtungsumfangs ein blow-down-Effekt mit erhöhtem Borstenverschleiß auftreten. Nach einer gewissen Einlaufphase reduziert sich aber der Verschleiß, und es liegt dann trotz Exzentrizität eine optimale dichtende Anordnung vor.

## Patentansprüche

1. Dichtungsanordnung (10) für eine nicht-hermetische Dichtung eines Spalts (11) zwischen einem Stator und einem Rotor (12), mit einer Bürstendichtung (13), wobei die Bürstendichtung (13) über ein mehrere Borsten (15) aufweisendes Borstenpaket (14) verfügt, wobei die Borsten (15) um ein Kernelement (16) gewickelt und am Kernelement (16) fixiert sind, wobei die Bürstendichtung (13) zumindest abschnittsweise in einem Aufnahmeraum angeordnet ist, der von einem Stützelement (18) und einem Deckelement (19) begrenzt ist, und wobei die Borsten (15) gegenüber Borstenschäften (20) abgewinkelte Dichtborstenabschnitte (21) aufweisen, deren Enden gegen eine Dichtfläche (22) des Rotors (12) laufen,
**dadurch gekennzeichnet,**
**dass** das Deckelement (19) an einem den Dichtborstenabschnitten (21) benachbarten Ende eine Auflagefläche (23) für die Borstenschäfte (20) aufweist, wobei der Durchmesser (D3) der Auflagefläche (23) in Relation zum inneren Durchmesser (D1) des Borstenpakets (14) im Bereich der Auflagefläche (23) so gewählt ist, dass bei einer möglichen, statischen Exzentrizität des Rotors (12) relativ zur Bürstendichtung (13) die Dichtborstenabschnitte (21) die Dichtfläche (22) des Rotors (12) noch am gesamten Umfang berühren.

2. Dichtungsanordnung nach Anspruch 1,
**dadurch gekennzeichnet,**
**dass** das die Auflagefläche (23) bildende Deckelement (19) eine mindestens zweifach höhere Steifigkeit aufweist als das Borstenpaket (14).

3. Dichtungsanordnung nach Anspruch 1 oder 2,
**dadurch gekennzeichnet,**
**dass** ein sich zwischen der Auflagefläche (23) des Deckelements (19) und einem Klemmelement (17) der Bürstendichtung erstreckender Abschnitt des Deckelements (19) unter Ausbildung eines Biegefreiraums (24) bezogen auf die Auflagefläche (23) von dem Borstenpaket (14) abgestellt ist.

4. Dichtungsanordnung nach einem der Ansprüche 1 bis 3,
**dadurch gekennzeichnet,**
**dass** das Stützelement (18) gegenüberliegend zur Auflagefläche (23) des Deckelements (19) eine Aufwölbung (25) aufweist, die unter Ausbildung einer Kavität (26) von dem Borstenpaket (14) abgestellt ist.

5. Dichtungsanordnung nach Anspruch 4,
**dadurch gekennzeichnet,**
**dass** die stützelementseitige Kavität (26) und der deckelementseitige Biegefreiraum (24) sich abschnittsweise überlappen.

## Claims

1. A seal arrangement (10) for a non-hermetic seal of a gap (11) between a stator and a rotor (12), having a brush seal (13), wherein the brush seal (13) is provided with a bristle pack (14) that has a plurality of bristles (15), wherein the bristles (15) are wound around a core element (16) and are fixed on the core element (16), wherein the brush seal (13) is arranged at least in sections in a receiving space that is delimited by a supporting element (18) and a cover element (19), and wherein the bristles (15) have sealing bristle sections (21) that are angled with respect to bristle shanks (20) and the ends of which run against a sealing face (22) of the rotor (12),
**characterised in that**
the cover element (19) has, at an end adjacent to the sealing bristle sections (21), a bearing face (23) for the bristle shanks (20), wherein the diameter (D3) of the bearing face (23) in relation to the inside diameter (D1) of the bristle pack (14) in the region of the bearing face (23) is selected in such a way that in the case of possible static eccentricity of the rotor (12) relative to the brush seal (13) the sealing bristle sections (21) still contact the sealing face (22) of the rotor (12) over the whole circumference.

2. A seal arrangement according to claim 1,
**characterised in that**
the cover element (19) that constitutes the bearing face (23) has a rigidity that is at least twice as high as that of the bristle pack (14).

3. A seal arrangement according to claim 1 or 2,
**characterised in that**
a section of the cover element (19) that extends between the bearing face (23) of the cover element (19) and a clamping element (17) of the brush seal is set off from the bristle pack (14) with the formation of a free bending space (24) relative to the bearing face (23).

4. A seal arrangement according to one of claims 1 to 3,
**characterised in that**
opposite the bearing face (23) of the cover element (19) the supporting element (18) has an arched portion (25) that is set off from the bristle pack (14) with the formation of a cavity (26).

5. A seal arrangement according to claim 4,
**characterised in that**
the cavity (26) on the supporting-element side and the free bending space (24) on the cover-element side overlap in sections.

## Revendications

1. Système de joint d'étanchéité (10) pour une étanchéité non hermétique d'un interstice (11) entre un stator et un rotor (12), avec un joint à brosse (13), ledit joint à brosse (13) étant pourvu d'un paquet de soies (14) composé de plusieurs soies (15), lesdites soies (15) étant enroulées autour d'un élément d'âme (16) et fixées sur l'élément d'âme (16), le joint à brosse (13) étant au moins partiellement disposé dans un espace de réception délimité par un élément de soutien (18) et un élément de recouvrement (19), et les soies (15) présentant des parties de soies d'étanchéité (21) coudées par rapport aux tiges de soies (20) et dont les extrémités se déplacent sur une surface d'étanchéité (22) du rotor (12), **caractérisé en ce que** l'élément de recouvrement (19) présente une surface d'appui (23) pour les tiges de soies (20) à une extrémité voisine des parties de soies d'étanchéité (21), le diamètre (D3) de la surface d'appui (23) étant choisi en relation avec le diamètre intérieur (D1) du paquet de soies (14) dans la zone de la surface d'appui (23) de telle sorte qu'en cas d'excentricité statique éventuelle du rotor (12) relativement au joint à brosse (13), les parties de soies d'étanchéité (21) continuent à toucher la surface d'étanchéité (22) du rotor (12) sur toute son étendue.

2. Système de joint d'étanchéité selon la revendication 1, **caractérisé en ce que** l'élément de recouvrement (19) formant la surface d'appui (23) présente une rigidité au moins deux fois supérieure à celle du paquet de soies (14).

3. Système de joint d'étanchéité selon la revendication 1 ou la revendication 2, **caractérisé en ce qu'**une partie de l'élément de recouvrement (19) s'étendant entre la surface d'appui (23) dudit élément de recouvrement (19) et un élément de serrage (17) du joint à brosse est décalée en formant un espace de flexion (24) par rapport à la surface d'appui (23) du paquet de soies (14).

4. Système de joint d'étanchéité selon l'une des revendications 1 à 3, **caractérisé en ce que** l'élément de soutien (18) présente une convexité (25) opposée à la surface d'appui (23) de l'élément de recouvrement (19), laquelle est décalée en formant une cavité (26) par rapport au paquet de soies (14).

5. Système de joint d'étanchéité selon la revendication 4, **caractérisé en ce que** la cavité (26) côté élément de soutien et l'espace de flexion (24) côté élément de recouvrement se chevauchent partiellement.
